# EUROPEAN PATENT APPLICATION

(11) **EP 4 131 068 A1**
(43) Date of publication of application: **08.02.2023**
(21) Application number: 21776443.0
(22) Date of filing: 08.03.2021
(51) Int. Cl.: G06K 9/62

(54) **METHOD, SYSTEM AND DEVICE FOR DETERMINING ACTION**

(30) Priority: 27.03.2020 CN 202010232145
(71) Applicant: Hangzhou Hikvision Digital Technology Co., Ltd., Hangzhou Zhejiang 310051 (CN)
(72) Inventor: ZHAO, Lin, Hangzhou Zhejiang 310051 (CN)
(74) Representative: Epping - Hermann - Fischer
(86) International application number: PCT/CN2021/079513
(87) International publication number: WO 2021/190284

(57) **Abstract**

The present application provides an action determination method, system and apparatus, which relates to the technical field of computers, comprising: obtaining a current event detected by an event detection device (101); when there is a target event group that matches an event group in a linkage rule and includes the current event in the obtained events, determining a target response action corresponding to the target event group from the linkage rule (102), wherein, an interval between occurrence time of any two events in the target event group does not exceed a preset synchronization fault tolerance duration, and the linkage rule includes a preset correspondence between an event group and a response action. It can be seen that a corresponding action can be determined through multiple events by applying this solution.

## Description

The present application claims the priority to a Chinese patent present application No. 202010232145.X, filed with the China National Intellectual Property Administration on March 27, 2020 and entitled "Method, system and device for determining action", which is incorporated herein by reference in its entirety.

### Technical Field

The present application relates to the technical field of computers, and in particular to an action determination method, system and apparatus.

### Background

In the application scenario of device linkage, a server can determine an action corresponding to an event detected by an event detection device in the scenario according to this event, and trigger another device in the scenario to perform the above action. For example, in a security scenario, after an alarm device detects an alarm event, it reports the alarm event to a server. After the server receives the alarm event, it determines the corresponding action as video recording, and triggers a monitoring device to record.

In practical applications, when a corresponding action is determined through an event, the accuracy of the determined action is low. Therefore, there is a requirement of using multiple events to jointly determine the corresponding action, that is, the requirement of using an event group to determine the corresponding action, thereby improving the accuracy of the determined action. For example, in the above example, the recording action is determined directly through the alarm event, but the monitoring device may fail to detect the target object. In this case, the recording action determined through the alarm event is not accurate, but it will still trigger the monitoring device to perform the recording action, which leads to the generation of unnecessary recorded data.

It can be seen that there is an urgent need for an action determination method to effectively realize the determination of a corresponding action jointly through multiple events.

### Summary

The purpose of the embodiments of the present application is to provide an action determination method, system, and apparatus, so as to determine a corresponding action jointly through multiple events. The specific technical solutions are as follows.

In a first aspect, an embodiment of the present application provides an action determination method, which includes:
obtaining a current event detected by an event detection device;
when there is a target event group that matches an event group in a linkage rule and includes the current event in the obtained events, determining a target response action corresponding to the target event group from the linkage rule, wherein, an interval between occurrence time of any two events in the target event group does not exceed a preset synchronization fault tolerance duration, and the linkage rule includes a preset correspondence between an event group and a response action.

In a second aspect, an embodiment of the present application provides an action determination system, which includes a server and at least one event detection device, wherein:
the event detection device is configured for detecting a current event that currently occurs, and sending the detected current event to the server;

The server is configured for receiving the current event, and determining, when there is a target event group that matches an event group in a linkage rule and includes the current event in the obtained events, a target response action corresponding to the target event group from the linkage rule, wherein, an interval between occurrence time of any two events in the target event group does not exceed a preset synchronization fault tolerance duration, and the linkage rule includes a preset correspondence between an event group and a response action.

In a third aspect, an embodiment of the present application provides an action determination apparatus, which includes:
an event obtaining module, configured for obtaining a current event detected by an event detection device;
an action determining module, configured for determining, when there is a target event group that matches an event group in a linkage rule and includes the current event in the obtained events, a target response action corresponding to the target event group from the linkage rule, wherein, an interval between occurrence time of any two events in the target event group does not exceed a preset synchronization fault tolerance duration, and the linkage rule includes a preset correspondence between an event group and a response action.

In a fourth aspect, an embodiment of the present application provides an electronic device, which includes a processor and a memory;
the memory is configured for storing computer programs;
the processor is configured for implementing steps of the action determination method of any one of the first aspect when executing the programs stored on the memory.

In a fifth aspect, an embodiment of the present application provides a non-transitory storage medium storing computer programs thereon which, when executed by a processor, cause the processor to implement steps of the action determination method of any one of the first aspect.

In a sixth aspect, an embodiment of the present application further provides a computer program product including instructions that, when running on a computer, cause the computer to implement steps of the action determination method of any one of the first aspect.

The beneficial effects of the embodiments of the present application are as follows:
The action determination when applying the solutions provided by the embodiments of the present application includes: obtaining a current event detected by an event detection device; when there is a target event group that matches an event group in a linkage rule and includes the current event in the obtained events, determining a target response action corresponding to the target event group from the linkage rule. Since the interval between the occurrence time of any two events in the target event group does not exceed a preset synchronization fault tolerance duration, it can be considered that all events in the target event group occur at the same time, and further, an action corresponding to the target event group can be determined in the linkage rule. It can be seen that the corresponding action can be determined jointly through multiple events by applying the action determination solution provided by the embodiments of the present application.

### Brief Description of the Drawings

In order to more clearly describe the technical solution of the embodiments of the application and the prior art, drawings needed in the embodiments and the prior art will be briefly described below. Obviously, the drawings described below are for only some embodiments of the present application, one of ordinary skills in the art can also obtain other drawings based on these drawings.
FIG. 1 is a schematic flow chart of an action determination method according to an embodiment of the present application;
FIG. 2 is a schematic diagram of a linkage rule according to an embodiment of the present application;
FIG. 3 is a schematic flow chart of another action determination method according to an embodiment of the present application;
FIG. 4 is a schematic flow chart of another action determination method according to an embodiment of the present application;
FIG. 5 is a schematic diagram of an event queue according to an embodiment of the present application;
FIG. 6 is a schematic diagram of a matching window according to an embodiment of the present application;
FIG. 7 is a schematic diagram of another linkage rule according to an embodiment of the present application;
FIG. 8 is a schematic structural diagram of an action determination system according to an embodiment of the present application;
FIG. 9 is a signaling diagram of an action triggering process according to an embodiment of the present application;
FIG. 10 is a schematic structural diagram of an action determination apparatus according to an embodiment of the present application;
FIG. 11a is a schematic structural diagram of an electronic device according to an embodiment of the present application;
FIG. 11b is a schematic structural diagram of another electronic device according to an embodiment of the present application.

### Detailed Description

In order to make objectives, technical solutions and advantages of the present application more apparent, the present application now will be described in detail with reference to the accompanying drawings and the detailed description. Obviously, the embodiments described are only some of the embodiments of the present application instead of all the embodiments. All other embodiments obtained by those of ordinary skill in the art based on the embodiments in the present application fall within the protection scope of the present application.

In order to achieve the purpose of jointly determining a corresponding action through multiple events, an embodiment of the present application provides an action determination method. Wherein, the action determination method can be applied to a server included in the action determination system. Wherein, the action determination system further includes at least one event detection device. Specifically, the event detection device is a device for detecting an event that occurs. For example, the above-mentioned event detection device may be an alarm device for detecting an alarm event.

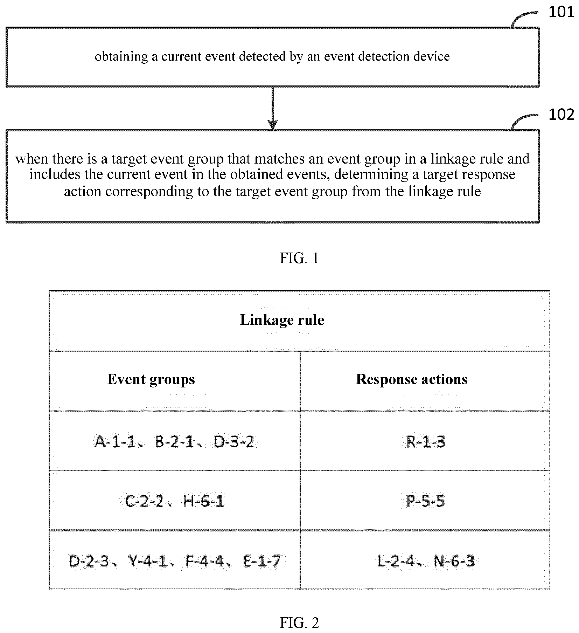

Referring to FIG. 1, FIG. 1 is a schematic flow chart of an action determination method according to an embodiment of the present application. The action determination method includes the following steps 101 to 102.

Step 101, obtaining a current event detected by an event detection device.

Specifically, when the event detection device detects an event, it can directly send the detected event to a server, or forward the detected event to a server through another device. Wherein, the event content of any event may include, but is not limited to, the identifier of the event detection device and the identifier of the event. The server can obtain information such as the event detection device that detected the event and the type of the event that occurred according to the event content of the received event.

Since it can be considered that the event is described by the event content, in one case, sending the detected event to a server can be understood as sending the event content of the detected event to the server. On this basis, step 101 of obtaining a current event detected by an event detection device can be understood as obtaining the event content of the current event detected by the event detection device.

The identifier of the event detection device may be at least one of the serial number, production number, and communication address of the device, and the event detection device that detected the event can be determined through the above identifier.

The identifier of the event may be an event code obtained by encoding each of possible events in advance, and the event that occurred can be determined through the identifier of the event.

In an embodiment of the present application, in the case that the event detection device is used to detect events of multiple channels, the above-mentioned event content may further include the identifier of an event occurrence channel. The event occurrence channel is a channel in which an event occurs as detected by the event detection device, and the identifier of the event occurrence channel may be the channel number, the serial number of a signal transmission path, and the like. The channel in which the event occurred in the event detection device can be determined through the identifier of the event occurrence channel. Wherein, the above-mentioned channel may be an area where events may occur in the scene, such as a vehicle door area, an office entrance area, a road intersection area, and the like. In addition, the above channel may also be a connection corresponding to an image acquisition device such as a camera, and one camera corresponds to one channel.

For example, the identifier of an access control device on a vehicle is M1, and the access control device M1 is used to detect events that occur on the left front door, left rear door, right front door, and right rear door of the vehicle, that is, the access control device M1 is used to detect events that occur in 4 channels. Wherein, the identifier of the channel where the left front door is located is L1, the identifier of the channel where the left rear door is located is L2, the identifier of the channel where the right front door is located is R1, and the identifier of the channel where the right rear door is located is R2. Possible events of the vehicle door include an opening event and a closing event, wherein the identifier of the opening event is OP, and the identifier of the closing event is CL. Assuming that the access control device detects that the front left door is opened, the event with the content "M1-L1-OP" can be sent to a server, and the server can determine, according to the received event content, the access control device identified as M1 has detected that an opening event identified as OP has occurred on the front left door corresponding to the event occurrence channel L1.

For subsequent action determination, after the step 101 of obtaining a current event detected by an event detection device, the server can determine the occurrence time of the current event.

In an embodiment of the present application, the server may determine time carried in the event content of the current event as the occurrence time of the current event. Specifically, the above-mentioned event content can also carry the occurrence time of the event, and the carried time is the time when the event detection device determines the occurrence of the current event, so that the server can directly determine the occurrence time of the event according to the event content without any need to determine the occurrence time of the event according to its own clock and other information, thereby improving the action determination efficiency. In addition, there may be errors in time systems of the server and the event detection device, and there may be a sending delay due to a network delay during the process of sending events, resulting in errors between the receiving time of the current event received by the server and the actual occurrence time of the current event. In this way, the time carried in the event content is used as the occurrence time of the event, which can improve the accuracy of the occurrence time, and then can improve the accuracy of event group matching when matching the event group that occurs at the same time in the future, so that the accuracy of determining the target response action according to the event group is higher.

In an embodiment of the present application, the server may determine the acquisition time of the current event as the occurrence time of the current event. Specifically, the server can perform time calibration on the event detection device, so that the time system of the server and the time system of the event detection device can be kept consistent, and when the network is good, the sending delay when the event detection device sends events can be ignored. In the above case, the server can take the acquisition time of the obtained event as the occurrence time of the event.

In addition, in an embodiment of the present application, the above-mentioned action determination system further includes a relay server, wherein, after the event detection device detects the current event, it can send the detected current event to the relay server, and then the relay server receives the current event and sends the current event to the server.

Step 102, when there is a target event group that matches an event group in a linkage rule and includes the current event in the obtained events, determining a target response action corresponding to the target event group from the linkage rule.

Wherein, the interval between the occurrence time of any two events in the target event group does not exceed a preset synchronization fault tolerance duration. Specifically, since there may be errors in time between various devices, and there may be delays in the transmission process of events, there are also errors in the occurrence time of the obtained events. Taking the synchronization fault tolerance duration as an acceptable maximum error range, two events whose occurrence time interval is less than the above-mentioned maximum error range can be taken as synchronously occurring events. The synchronization fault tolerance duration can be 2 seconds, 3 seconds, 5 seconds, etc. The target event group may include events that occurred earlier and/or later than the current event. In another case, when various devices can be kept synchronized in terms of the time, the value of the above synchronization fault tolerance duration may also be 0. That is, when the occurrence time of the two events coincide, the two events are considered to occur at the same time.

In an embodiment of the present application, when it is determined that the interval between the occurrence time of any two events in the target event group does not exceed the preset synchronization fault tolerance duration, it can be determined that the interval between the earliest occurrence time and the latest occurrence time in the occurrence time of all events in the target event group does not exceed the synchronization fault tolerance duration.

In addition, since the current event is a currently received event, in order to ensure that the current event is used as an event on which action triggering depends, the target event group includes at least the current event. The current event is an event processed this time, which is the latest received event. For the event group that does not contain the current event, the action triggering process has been executed before the current event is processed, and there is no need to repeat the above process. Therefore, the target event group includes at least the current event, which can avoid repeated execution of action triggering steps, thus saving computation resource.

The above linkage rule is a pre-configured rule including a preset correspondence between an event group and a response action. Wherein, each event group may correspond to one or more response actions, that is, one event group may determine one or more response actions. Wherein, the action content of the response action may include an action identifier. The action identifier may be an action code obtained by encoding each of possible actions in advance, and the action can be determined by the action identifier. Wherein, the above actions also vary according to specific application scenarios. For example, the above actions may be video storing, audio storing, object recognition, etc.

In an embodiment of the present application, matching an event group in the linkage rule means that the target event group and this event group in the linkage rule contain the same number of events and the same event content. For the target event group that matches the event group in the linkage rule, the corresponding response action can be determined in the linkage rule. For an event group that does not match any event group in the linkage rule, it is difficult to determine a corresponding response action in the linkage rule.

Wherein, the above event content may be described based on an event type and the resource number of the corresponding event detection device.

In another embodiment of the present application, when matching the target event group with the event groups in the linkage rule, in addition to the number of included events and the event content, the occurrence time of the event may also be considered. In this case, on the basis of the foregoing, the target event group is determined to match an event group in the linkage rule only when the occurrence time of the events included in the target event group and included in the event group in the linkage rule also match.

In an embodiment of the present application, it can be searched from the received events whether there is a target event group that matches an event group in the linkage rule and includes the current event, and when the target event group is found, a target response action corresponding to the target event group is determined from the linkage rule.

Since the linkage rule includes the correspondence between an event group and a response action, and the target event group matches an event group in the linkage rule, the response action corresponding to the target event group can be determined in the linkage rule, and the determined response action can be taken as a target response action.

In an embodiment of the present application, when multiple target event groups are obtained according to the current event, the target response actions respectively corresponding to respective target event groups may be determined in the linkage rule respectively.

In an embodiment of the present application, after obtaining the current event in the above step 101, a difference value between the occurrence time and the acquisition time of the current event can also be determined. In case that the difference value meets a preset delay allowance condition and there is the target event group matching the event group in the linkage rule and containing the current event in the obtained events, the target response action corresponding to the target event group can be determined from the linkage rule. Wherein, in the case that the occurrence time of the current event is the acquisition time when the server obtains the current event, the above difference value is 0, in this case, there is no need to determine the difference value between the occurrence time and the acquisition time.

The above-mentioned delay allowance condition may include that the above-mentioned difference value is not greater than a preset delay allowance duration, or that the above-mentioned difference value is less than a preset duration threshold value. Wherein, the above-mentioned delay allowance duration may be 7 seconds, 8 seconds, 10 seconds, etc., which is not limited in this embodiment of the present application. The above-mentioned delay allowance duration may be different from the duration threshold value.

In the case that the above difference value is greater than the delay allowance duration or the difference value is not less than the preset duration threshold value, it indicates that the obtained event is abnormal, so the determination of a target event group is not performed for the current event; and in the case that the above difference value is not greater than the preset delay allowance duration or the difference value is less than the preset duration threshold value, the target event group can be determined according to the current event.

In an embodiment of the present application, the obtained event may be an event whose difference value between the occurrence time and the acquisition time meets the preset delay allowance condition from the cached events detected by the event detection device. That is, in this embodiment, the event which meets the delay allowance condition from the cached events detected by the event detection device is called an obtained event. In this way, events can be screened to remove invalid events, thereby improving the accuracy and efficiency of the target event group determination. Wherein, in the case that the occurrence time of the current event is the acquisition time when the server obtains the current event, the above difference value is 0, in this case, there is no need to determine the difference value between the occurrence time and the acquisition time.

In an embodiment of the present application, after an event detected by the event detection device is obtained, the obtained event can be cached.

In another embodiment of the present application, for each obtained event, after the event is obtained, the difference value between the occurrence time and the acquisition time of the event may be determined, and the event is cached only when the difference value meets the preset delay allowance condition, so that for each of the cached events, the difference value between the occurrence time and the acquisition time meets the preset delay allowance condition. In this way, all the cached events meet the above delay allowance condition, and each time when judging whether to determine a target response action after obtaining the current event, the judgment can be made only for the cached events.

In another embodiment of the present application, the obtained event may be an event whose occurrence time is within a second time range from the cached events detected by the event detection device. Wherein, the second time range is the time range determined with the current time as a benchmark and the preset delay allowance duration as an extension duration. Specifically, the obtained event may be cached, and when determining a target event group, the target event group is determined only from the cached events whose occurrence time is within a second time range. Alternatively, it is also possible to cache only the events whose occurrence time is within the second time range, and remove the events outside the second time range as time passes, so as to discard the events which occur too early and are useless, thereby saving cache resources. In this way, the obtained events are events, from the cached events whose occurrence time is within the second time range.

Based on the above embodiment, in an implementation, an event whose difference value between the occurrence time and the current time is greater than the preset delay allowance duration can be continuously detected from the cached events; and the detected event is removed from the cached events.

In an embodiment of the present application, the above-mentioned obtained event may be not only an event that meets a preset delay allowance condition, but also an event whose occurrence time is within the second time range. For example, when the delay allowance condition is that the aforementioned difference value is less than the preset duration threshold value, and the aforementioned duration threshold value and the delay allowance duration are different, in this case, the above-mentioned obtained event is the intersection of the second type event and the third type event. Wherein, the second type event is an event whose difference value is less than the duration threshold value, and the third type event is an event whose occurrence time is within the second time range.

The action determination when applying the solutions provided by the embodiments includes: obtaining a current event detected by an event detection device; when there is a target event group that matches an event group in a linkage rule and includes the current event in the obtained events, determining a target response action corresponding to the target event group from the linkage rule. Since the interval between the occurrence time of any two events in the target event group does not exceed a preset synchronization fault tolerance duration, it can be considered that all events in the target event group occur at the same time, and further a response action corresponding to the target event group can be determined in the linkage rule. It can be seen that the corresponding action can be determined jointly through multiple events by applying the action determination solution provided by the aforementioned embodiments.

The action determination solution provided by the aforementioned embodiments will be described below by using a specific example.

It is assumed that arranged in a monitoring scene are an infrared device to detect whether the emitted infrared rays are reflected, a camera 1 to acquire images and detect whether there is an object in the collected images, and a camera 2 to acquire images and detect whether a red light running has occurred based on the acquired images. The synchronization fault tolerance duration is 20s. The linkage rule includes an event group 1 and an event group 2, wherein the event group 1 includes a first event and a second event, the event group 2 includes a second event and a third event, the first event indicates that an object is detected, and the second event indicates that infrared rays are reflected, and the third event indicates that a red light is ran. The response action corresponding to the event group 1 is recording of camera 1, and the response action corresponding to event group 2 is recording of camera 2.

If the infrared device detects at the 10th second that infrared rays are reflected, the second event is generated. The server obtains the second event as the current event. Before this time, the events that the server has obtained include the second event obtained at the 1 st second, the third event obtained at the 3rd second, and the first event obtained at the 8th second.

It can be seen from above that a target event group including the first event obtained at 8s and the second event obtained at 10s matches the above event group 1, and the time interval of 2s between 8s and 10s does not exceed the synchronization fault tolerance duration of 20s, the response action corresponding to the event group 1 is recording of camera 1. Therefore, it is determined that the target response action is recording of camera 1, and camera 1 starts recording.

In an embodiment of the present application, the action content of the response action may further include the identifier of a response device.

Wherein, the response device is a device for executing the determined action. For example, the response device may be a hard disk device that executes a video storage action, or the like.

The identifier of the response device is the identifier of a device for executing a response action, which can be at least one of the serial number, production number, and communication address of the device, and the response device for executing the response action can be determined by the above-mentioned identifier. In this way, not only the action that occurs, but also the response device for executing the action can be determined according to the action content of the response action.

In an embodiment of the present application, in the case that the response device can perform a response action for multiple response channels, the above-mentioned action content may further include the identifier of the action response channel. The action response channel is an channel operated by the response action in all response channels of the response device. The identifier of the action response channel may be the number of the response channel or the like. The object operated in response to the action in the response device can be determined through the identifier of the action response channel.

For example, the identifier of a video storage device in a monitoring system is H1, and the video storage device H1 is used to store the video transmitted by a first signal source, a second signal source, and a third signal source, that is, the video storage device H1 can execute response actions for 3 response channels. Wherein, the identifier of the response channel where the first signal source is located is Y1, the identifier of the response channel where the second signal source is located is Y2, the identifier of the response channel where the third signal source is located is Y3, and the response action performed by the video storage device includes an storage action whose identifier is S1. Assuming that the response action is specifically: triggering the video storage device with the response device identifier of H1 to perform the storage action identified as S1 on the video input by the second signal source with the action response channel identifier of Y2, the action content of the response action can be "H1 -Y2-S 1".

Referring to FIG. 2, FIG. 2 is a schematic diagram of a linkage rule according to an embodiment of the present application. The linkage rule includes each event group and response actions respectively corresponding to respective event groups. The event content of each event in the event group includes the identifier of the event detection device, the identifier of the event occurrence channel, the identifier of the event. The action content of each action in the response action includes the identifier of a response device, the identifier of the action response channel, the identifier of the action. Assuming that the target event group is "C-2-2, H-6-1 ", the triggered linked action can be determined as "P-5-5" according to the shown linkage rule. Wherein, the first letters in "C-2-2" and "H-6-1 ", namely C and H, represent the identifiers of the event detection devices, and the first numbers, namely 2 and 6, represent the identifiers of the event occurrence channels, and the second numbers represent the identifiers of the events; and the letter P in "P-5-5" represents the identifier of the response device, the first number 5 represents the identifier of the corresponding channel of the action, and the second number 5 represents the identifier of the action.

Assuming that the target event group is "C-2-2, H-6-1", it can be determined from the linkage rule that the response action corresponding to the above target event group is "P-5-5".

In an embodiment of the present application, after determining the target response action corresponding to the target event group from the linkage rule, the above action determination method further includes: triggering, based on the determined target response action, a response device to execute the target response action.

Specifically, after determining the target response action, the server can determine the response device for executing the above target response action according to the action content of the target response action, and send a trigger instruction about the target response action to the above response device. After receiving the trigger instruction, the response device determines an object to execute the action according to the identifier of the channel in the action content of the target response action, and implements the target response action for the determined object.

In an embodiment of the present application, when multiple target response actions are determined, trigger instructions respectively for the target response actions may be sent to the corresponding response devices respectively, to trigger each response device to execute a corresponding target response action.

In an embodiment of the present application, in the case that the server includes a server and a relay server, the server may send, after determining the target response action, a trigger instruction about the target response action to the relay server, and then the relay server triggers the corresponding response device to execute the target response action.

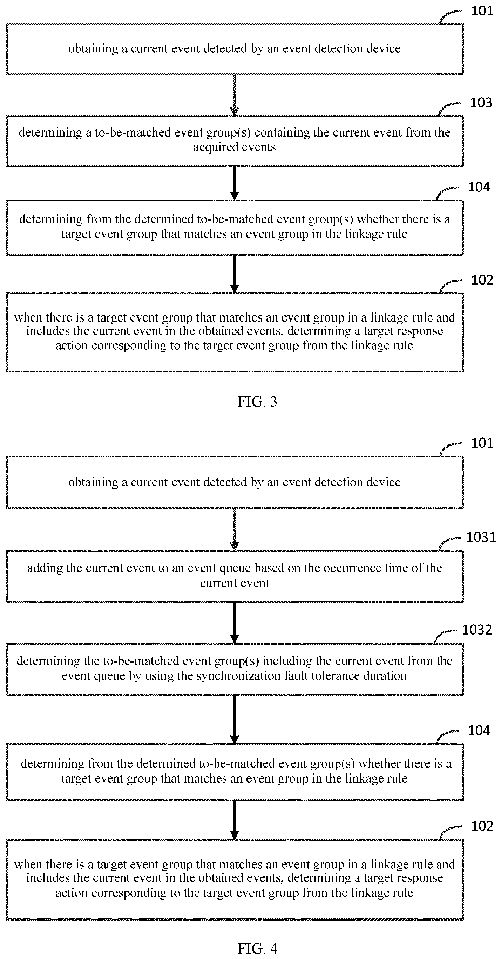

Referring to FIG. 3, in an embodiment of the present application, after obtaining an current event in the above step 101, the method may further include the following steps 103-104.

Step 103, determining a to-be-matched event group(s) containing the current event from the acquired events.

Wherein, the interval between the occurrence time of any two events in each of the determined to-be-matched event group(s) does not exceed the synchronization fault tolerance duration.

Specifically, when the obtained events do not contain any other event that meets an requirement that the interval between the occurrence time of this event and the occurrence time of the current event does not exceed the synchronization fault tolerance duration, that is, the interval between the occurrence time of any obtained event and the current event exceeds the synchronization fault tolerance duration, the current event can be directly taken as the to-be-matched event group(s). In this way, the to-be-matched event group(s) only include(s) the current event, and does not include other events in the obtained events.

When the obtained events contain at least one other event that meets an requirement that the interval between the occurrence time of this event and the occurrence time of the current event does not exceed the synchronization fault tolerance duration, the current event can be combined with such type of events to obtain a to-be-matched event group(s) in which the interval of occurrence time of any two events is not larger than the synchronization fault tolerance duration. Since there are multiple combinations of multiple events, multiple to-be-matched event groups can be obtained. The to-be-matched event group can also contain only the current event, which is not limited in the embodiment of the present application.

For example, it is assumed that the received events include E1, E2, E3, and E4, where E3 is the current event, and the interval between the occurrence time of any two events above does not exceed the synchronization fault tolerance duration. Then the determined to-be-matched event groups include: (E3), (E1, E3), (E2, E3), (E4, E3), (E1, E2, E3), (E2, E3, E4), (E1, E3, E4), (E1, E2, E3, E4).

In an embodiment of the present application, the number of events included in the to-be-matched event group may be within a preset number range, and the preset number range may be [1, 4], [2, 4], [3, 5], etc. When the number of events contained in the to-be-matched event group is too large, the combinations of the current event and other events are too complicated, resulting in a large consumption of computing resources, and it is not conducive to subsequent matching of the to-be-matched event group with the event groups in the linkage rule. When the number of events included in the to-be-matched current event group is too small, the response action can be determined when a small number of events occur, which is likely to reduce the accuracy of the determined response action. Limiting the number of events in the to-be-matched event group within a preset number range can not only improve the matching efficiency, but also ensure the accuracy of the determined response action.

In an embodiment of the present application, the number of events included in the to-be-matched event group may not be greater than the maximum number of events included in each event group in the linkage rule. For example, assuming that the linkage rule contains 5 event groups, the number of events included in each event group is 3, 4, 2, 2, and 3, wherein the maximum number of events included is 4.

When the number of events included in the to-be-matched event group is greater than the above-mentioned maximum number, no corresponding response action can be found in the linkage rule for this to-be-matched event group. Therefore, the number of events included in the to-be-matched event group can be limited to not more than the above maximum number, which can reduce the probability of obtaining an invalid to-be-matched event group, thereby saving computational resources.

Step 104: determining from the determined to-be-matched event group(s) whether there is a target event group that matches an event group in the linkage rule.

That is, a target event group that matches an event group in the linkage rule is determined from the determined to-be-matched event group(s).

Specifically, the to-be-matched event group can be matched with the event groups in the linkage rule in sequence. When the to-be-matched event group and an event group in the linkage rule contain the same number of events and the same events, it can be considered that the to-be-matched event group matches this event group in the linkage rule, so it is determined that there is a target event group matching an event group in the linkage rule.

In an implementation, it can be determined whether the events are same according to the content of the events.

In addition, in an embodiment of the present application, when searching for a target event group, it is also possible to first search the linkage rule to determine whether there is a comparison event group including the current event. If there is no comparison event group, it means that the current event does not have the possibility of triggering a linked action. If there is the comparison event group, it is judged whether each event included in the comparison event group has occurred within the synchronization fault tolerance duration before and after the occurrence time of the current event. If each event has occurred, the comparison event group can be determined as the target event group. The judgment is made for each comparison event group in turn, until all comparison event groups are traversed.

Referring to FIG. 4, FIG. 4 is a schematic flow chart of another action determination method according to an embodiment of the present application. The above step 103 of determining a to-be-matched event group(s) may specifically include the following steps 1031-1032.

Step 1031, adding the current event to an event queue based on the occurrence time of the current event.

Wherein the event queue is a queue in which the obtained events are arranged in the order of occurrence time. The above-mentioned order of the occurrence time includes the order of occurrence from early to late and the order of occurrence from late to early.

In an embodiment of the present application, the difference value between the occurrence time of the current event and the acquisition time of obtaining the current event can be determined. If the difference value is greater than the preset delay allowance duration, it means that the received event is abnormal, therefore, the current event is not added to the event queue. If the above difference value is not greater than the preset delay allowance duration, the above current event can be added to the event queue at the position corresponding to its occurrence time.

For example, assuming that the acquisition time of the current event is the 15th second, and the preset delay allowance duration is 6 seconds, if the current event occurs at the 10th second, the difference value between the acquisition time and the occurrence time is less than the preset delay allowance duration, therefore, the current event is added to the event queue; if the current event occurs at the 5th second, the difference value between the above acquisition time and the occurrence time is greater than the above preset delay allowance duration, so the current event is not added to the event queue.

In an embodiment of the present application, the events included in the event queue may be events that occur within a second time range.

Wherein, the second time range is a time range determined with the current time as a benchmark and the preset delay allowance duration as an extension duration. For example, assuming that the current time is the time at the 8th second, and the preset delay allowance duration is 5s, then the second time range is the time range between the time at the 3rd second and the time at the 13th second.

In this case, the events cached in the event queue are events whose difference value between the occurrence time and the current time is not greater than the preset delay allowance duration.

Specifically, for an event that has been received, as time goes by, the event whose difference value between the occurrence time and the current time is greater than the preset delay allowance duration is discarded from the event queue. In this way, events cached in the event queue are events whose occurrence time is close to the current time, and events that occur too early and are useless are discarded, thereby reducing the length of the event queue and saving cache resources.

Step 1032, determining the to-be-matched event group(s) including the current event from the event queue by using the synchronization fault tolerance duration.

For example, each of events can be matched one by one in the event queue by using the synchronization fault tolerance duration to obtain events whose interval of occurrence time does not exceed the synchronization fault tolerance duration, so as to determine the to-be-matched event group according to the obtained events.

In an embodiment of the present application, the event queue may include multiple positions, each position corresponds to one time point, and time points respectively corresponding to respective positions in the event queue follow a preset variation rule, and the queue position of each event in the event queue is the position corresponding to the occurrence time of this event. Specifically, the above-mentioned preset variation rule may be a rule that progresses in time order, of course, it is not limited to a progressive rule, for example, it may also be a rule that reverses in time order.

In this way, for an event that occurs at any time point, the position corresponding to the time point can be found in the event queue, and then the event is added to the found position.

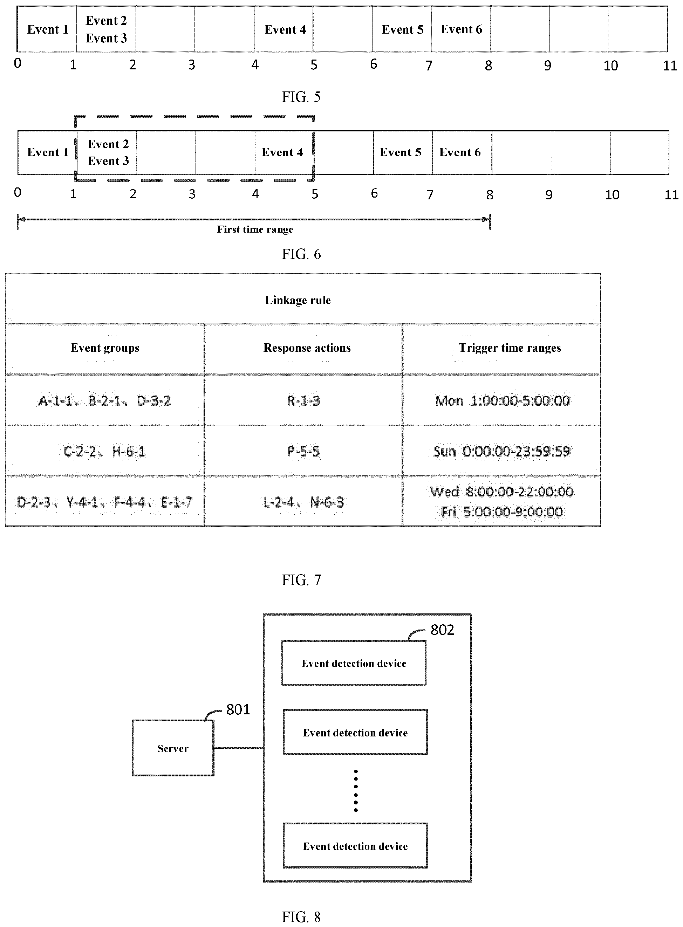

Referring to FIG. 5, FIG. 5 is a schematic diagram of an event queue according to an embodiment of the present application. In FIG. 5, 0, 1, 2... represent the time points respectively, and each position in the event queue is represented by a grid, that is, each time point corresponds to one position, and the time points respectively corresponding to respective positions progress in time order. Each event is added to the event queue according to the time point corresponding to the occurrence time. It is assumed that the current event is event 4, and the occurrence time of event 4 is the time at the 4th second, therefore, the above-mentioned event 4 is added to the position corresponding to the 4th second as shown in the figure.

In an embodiment of the present application, the time points respectively corresponding to respective positions in the event queue may be time points within the second time range. In this way, all the events cached in the event queue are events whose occurrence time are close to the current time, and events that occur too early and are useless are discarded, thereby reducing the length of the event queue and saving cache resources.

In an embodiment of the present application, in the case where each position of the above-mentioned event queue corresponds to one time point, for the above-mentioned step 1032, when determining the to-be-matched event group(s), the to-be-matched event group(s) including the current event are determined from the event queue by performing sequential matching in the event queue through a matching window. The above matching window is not a real window, but a virtual window for determining events from the event queue in a certain length. When determining an event, the determined event is an event located within the matching window.

Wherein, the length of the matching window is the length corresponding to the synchronization fault tolerance duration in the event queue. That is to say, in the case of describing the length of the matching window in terms of duration, the length of the matching window is less than or equal to the synchronization fault tolerance duration, so that the interval between the occurrence time of any two the events in the matching window does not exceed the synchronization fault tolerance duration, therefore, the events in the matching window can be considered as synchronous events. In this way, events obtained through matching in which the interval between the occurrence time of any two events does not exceed the synchronization fault tolerance duration can be avoided, and the matching efficiency can be improved.

It is preferable that the length of the matching window is equal to the synchronization fault tolerance duration. In this case, a maximum number of events in which the interval between the occurrence time of any two events does not exceed the synchronization fault tolerance duration can be determined according to the matching window at one time.

In addition, if the length of the matching window is less than the synchronization fault tolerance duration, in this case, the difference between the length of the matching window and the length of the synchronization fault tolerance duration can be set to be less than a preset length difference. The above-mentioned preset length difference may be determined according to the precision of the duration of the event.

In another embodiment of the present application, the length of the matching window may also be not less than the length between adjacent positions corresponding to adjacent time points in the event queue. For convenience of description, the length is hereinafter referred to as an adjacent length. When the length of the matching window is less than the above adjacent length, the matching window can only contain events that occurred at one time point at the same time, and only the current event may have occurred at one time point, so the obtained to-be-matched event group only contains the current event, it is difficult to determine a response action through multiple events. When the length of the matching window is greater than or equal to the above adjacent length, the matching window can contain events that occurred at two or more time points at the same time, so that the probability of multiple events in the to-be-matched event group is high, and it is easier to determine the response action through multiple events. It is worth mentioning that in this case, when obtaining the to-be-matched event group, the interval between the occurrence time of any two events needs to be considered, and events with an interval exceeding the synchronization fault tolerance duration are excluded, so as to ensure that the interval between the occurrence time of any two events in the to-be-matched event group does not exceed the synchronization fault tolerance duration.

The maximum number of events contained in the to-be-matched event group is related to the length of the matching window. When the length of the matching window is larger, the matching window contains more time points. Since each time point corresponds to one position in the event queue, and one or more events may occur in each position, the longer the length of the matching window is, the greater the maximum number of events contained in the to-be-matched event group.

Specifically, during the sliding process of the matching window, there may be multiple events in the matching window including the current event. By combining multiple events in the matching window, multiple to-be-matched event groups including the current event can be obtained.

Referring to FIG. 6, FIG. 6 is a schematic diagram of a matching window according to an embodiment of the present application. As shown in FIG. 6, assuming that the synchronization fault tolerance duration is 4 seconds, the length of the matching window is the length between the corresponding positions in the event queue at time points with an interval of 4 seconds. Assuming that the current event is event 4, the matching window slides to the current position, and the matching window contains event 2, event 3, and event 4. The to-be-matched event groups obtained according to the matching window include: (event 4), (event 2, event 4), (event 3, event 4), (event 2, event 3, event 4).

In an embodiment of the present application, since the to-be-matched event group needs to include the current event, when the matching window slides, the current event also needs to be kept within the matching window. The sliding range of the matching window is the queue area corresponding to the first time range in the event queue, and the queue area corresponding to the first time range is the area between the start position corresponding to the start time of the first time range and the end position corresponding to the end time of the first time range.

Wherein, the first time range is a range with the occurrence time of the current event as a center and the synchronization fault tolerance duration as an extended duration. Specifically, it is the first time range obtained by extending forward and backward respectively with the synchronization fault tolerance duration as the extension duration and the occurrence time of the current event as the center. For example, assuming that the reference time is the time at the 5th second and the synchronization fault tolerance duration is 3 seconds, the first time range is the range from the 2nd second to the 8th second.

The queue area corresponding to the first time range is an area formed by the queue positions respectively corresponding to respective time points in the first time range. Taking FIG. 5 as an example, assuming that the first time range is from the 0th second to the 4th second, then the queue area corresponding to the first time range is an area composed of 4 positions from the left; assuming that the first time range is from the 0th to the 8th second, the queue area corresponding to the first time range is an area composed of 8 positions from the left.

Taking FIG. 6 as an example, the queue area corresponding to the first time range is the area from the position of the 0th second to the position of the 8th second in the event queue, and the matching window needs to slide within the above-mentioned queue area.

In an embodiment of the present application, the matching can be sequentially performed from a position corresponding to a start time of a first time range as a start position in the queue area corresponding to the first time range in the event queue by sliding the matching window in a preset sliding step length. In the matching process, the to-be-matched event group in the matching window including the current event is determined within the queue area until the matching ends.

The above-mentioned preset sliding step length may be the length between adjacent positions corresponding to adjacent time points in the event queue, or may be the length between positions corresponding to time ranges separated by multiple time points, or may be a preset set fixed duration.

In an embodiment of the present application, the preset sliding step length may be determined according to the precision of the event occurrence time. For example, assuming that the precision of the occurrence time of the event is 1 second, the preset sliding step length can be determined to be the length corresponding to the time interval of 1 second in the event queue; assuming that the precision of the occurrence time of the event is 0.1 second, the preset sliding step length can be determined to be the length corresponding to the time interval of 0.1 seconds in the event queue.

Events located in the matching window can be combined with the current event to obtain a to-be-matched event group(s) including the current event, until the end of the matching.

In one case, along the sliding direction of the matching window, if the number of events corresponding to positions from the first position to the second position in the event queue is less than the preset event number, it can indicate the end of the matching, wherein the first position is the position corresponding to the start side of the matching window in the first time range, and the second position is the end position in the first time range.

This embodiment of the present application only uses the above example to describe "the end of the matching", which does not constitute a limitation.

In addition, in an embodiment of the present application, the linkage rule includes a correspondence among an event group, a response action, and a triggering time range. That is, for each event group, the response action and the triggering time range corresponding to this event group are recorded in the linkage rule.

The above-mentioned triggering time range can be understood as an effective time range of the linkage rule. When the occurrence time of the events included in the target event group is within the above-mentioned triggering time range, the corresponding response action in the linkage rule is determined according to the target event group as the target response action. When the occurrence time of the events included in the target event group are outside the above-mentioned triggering time range, the linkage rule is not considered to be effective, so the corresponding response action in the linkage rule is not determined as the target response action.

The above-mentioned triggering time range may be preset according to the application scenario. Take the access control device of an company as an example. During the time period of 8:00-17:00 from Monday to Friday, the frequency of company personnel entering and leaving the company is high, which however is low during the other time period. Therefore, the triggering time range of the access control device to open the access control can be set as the period of 8:00-17:00 from Monday to Friday.

In an embodiment of the present application, when determining the target response action, the target triggering time range corresponding to the target event group may be determined from the linkage rule. In case that there is an intersection between the target triggering time range and a third time range, the response action corresponding to the target event group is determined as the target response action. The above target triggering time range is a triggering time range recorded in the correspondence for the target event group in the linkage rule.

Wherein, the third time range is a range between the earliest occurrence time and the latest occurrence time among the occurrence time of the events included in the target event group. For example, assuming that the events included in the target event group have the earliest occurrence time of 15:00:05 and the latest occurrence time of 15:00:12, the third time range is from 15:00:05 to 15:00:12.

Specifically, when there is an intersection between the target triggering time range and the third time range, it can be considered that the occurrence time of the events in the target event group is within the target triggering time range, and the triggering rule takes effect. Therefore, the response action corresponding to the target event group is determined as the target response action. When there is no intersection between the target triggering time range and the third time range, it can be considered that the occurrence time of the events in the target event group is outside the target triggering time range, and the triggering rule does not take effect, so the target response action is no longer determined.

Referring to FIG. 7, FIG. 7 is a schematic diagram of another linkage rule according to an embodiment of the present application. Assuming that the target event group is "A-1-1, B-2-1, D-3-2", the third time range corresponding to the target event group is Mon 0:00:56-1:00:02, and the target triggering time range is Mon 1:00:00-5:00:00. It can be seen that there is an intersection between the third time range and the target triggering time range, and it is considered that the rule takes effect. Therefore, "R-1-3" is determined as the target response action.

Referring to FIG. 8, FIG. 8 is a schematic structural diagram of an action determination system according to an embodiment of the present application. The system includes a server 801 and at least one event detection device 802, wherein:
the event detection device 802 is configured for detecting a current event that currently occurs, and sending the detected current event to the server 801;

The server 801 is configured for receiving the current event, and determining, when there is a target event group that matches an event group in a linkage rule and includes the current event in the obtained events, a target response action corresponding to the target event group from the linkage rule, wherein, an interval between occurrence time of any two events in the target event group does not exceed a preset synchronization fault tolerance duration, and the linkage rule includes a preset correspondence between an event group and a response action.

In an embodiment of the present application, the above-mentioned event detection device may include various electronic devices used to detect the occurrence of an event in an application scenario. The above-mentioned application scenario may be a shop, a residence, a factory, etc., and the electronic device in the application scenario may include a video acquisition device, an access control device, a lighting control device, etc.

In an embodiment of the present application, the server has a communication interface, through which the server receives the events sent by the event detection device.

In an embodiment of the present application, the system further includes at least one response device, wherein:
The server 801 is further configured for sending a trigger instruction about the target response action to the at least one response device after determining the target response action;
The response device is configured for executing the target response action when receiving a trigger instruction about the target response action.

In an embodiment of the present application, since the device may include multiple functions, for example, the alarm device can detect an alarm event and can also send an alarm signal according to the alarm event, so the above-mentioned response device and event detection device can be the same device.

In an embodiment of the present application, the above-mentioned system further includes a client, wherein:
the client is configured for configuring the linkage rule, and sending the configured linkage rule to the server;
the server is further configured for receiving the linkage rule sent by the client, and storing the linkage rule.

The above-mentioned client may be a mobile device, such as a mobile phone, a tablet computer, or an electronic computer, etc. In this way, it is convenient for users to update the linkage rule through the client at any time.

In an embodiment of the present application, the above-mentioned system further includes a relay server, wherein:
the event detection device is configured for detecting a current event that currently occurs, and sending the detected current event to the relay server;
the relay server is configured for receiving the current event and sending the current event to the server.

In an embodiment of the present application, the server may also be configured for sending a trigger instruction about the target response action for at least one response device to the relay server after determining the target response action;

The relay server may also be configured for receiving the trigger instruction about the target response action for at least one response device, and sending the trigger instruction about the target response action to the at least one response device.

For a detailed description of the functions that can be implemented by the server, references may be made to the corresponding content of the foregoing method embodiments, which will not be repeated here.

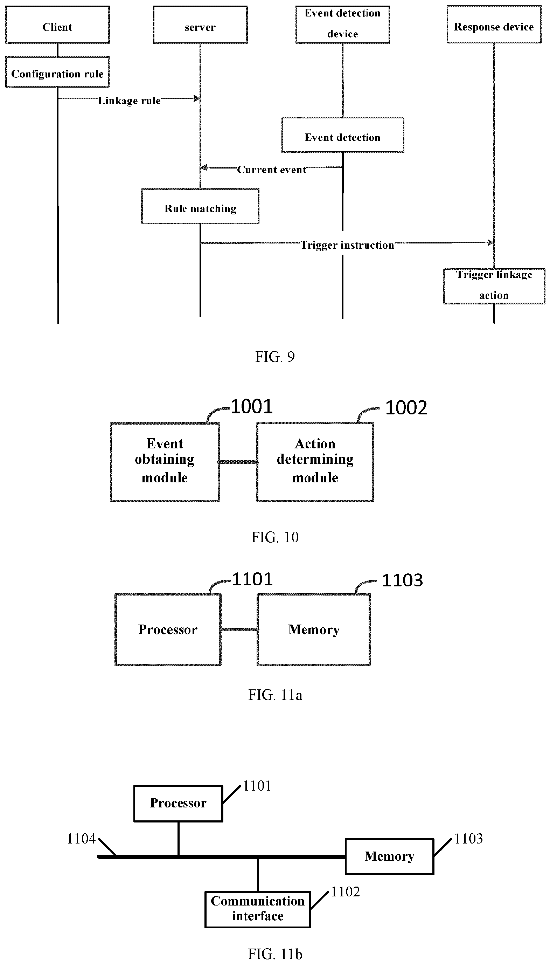

Referring to FIG. 9, FIG. 9 is a signaling diagram of an action triggering process according to an embodiment of the present application.

The client configures the linkage rule and sends the configured linkage rule to the server;
the event detection device detects the current event and sends the detected current event to the server;
after the server receives the current event, it matches the target response action according to the linkage rule, generates a trigger instruction about the target response action, and sends the trigger instruction to the corresponding response device, wherein, the specific processing processes of the server refer to the above description of the action determination method, and will not be repeated here.

After receiving the trigger instruction, the response device triggers the linked action according to the received trigger instruction.

The action determination when applying the solutions provided by the aforementioned embodiments includes: obtaining a current event detected by an event detection device; when there is a target event group that matches an event group in a linkage rule and includes the current event in the obtained events, determining a target response action corresponding to the target event group from the linkage rule. Since the interval between the occurrence time of any two events in the target event group does not exceed a preset synchronization fault tolerance duration, it can be considered that all events in the target event group occur at the same time, and further, an action corresponding to the target event group can be determined in the linkage rule. It can be seen that the corresponding action can be determined jointly through multiple events by applying the action determination solution provided by the aforementioned embodiments.

Referring to FIG. 10, FIG. 10 is a schematic structural diagram of an action determination apparatus according to an embodiment of the present application, the apparatus includes:
an event obtaining module 1001, configured for obtaining a current event detected by an event detection device;
an action determining module 1002, configured for determining, when there is a target event group that matches an event group in a linkage rule and includes the current event in obtained events, a target response action corresponding to the target event group from the linkage rule, wherein, an interval between occurrence time of any two events in the target event group does not exceed a preset synchronization fault tolerance duration, and the linkage rule includes a preset correspondence between an event group and a response action.

In an embodiment of the present application, the above-mentioned apparatus further includes:
a to-be-matched event group determination module, configured for determining, after obtaining the current event detected by the event detection device, a to-be-matched event group(s) including the current event from the obtained events, wherein, the interval between occurrence time of any two events in each of the determined to-be-matched event group(s) does not exceed the synchronization fault tolerance duration;
a target event group determination module, configured for determining, from the determined to-be-matched event group(s), the target event group that matches the event group in the linkage rule.

In an embodiment of the present application, the to-be-matched event group determination module includes:
an event queue adding unit, configured for adding, after obtaining the current event detected by the event detection device, the current event to an event queue based on occurrence time of the current event, wherein the event queue is a queue in which the obtained events are arranged in an order of the occurrence time;
a to-be-matched event group determination unit, configured for determining the to-be-matched event group(s) including the current event from the event queue by using the synchronization fault tolerance duration.
In an embodiment of the present application, each position in the event queue correspond to one time point, and time points respectively corresponding to respective positions in the event queue follow a preset variation rule, and a queue position of each event in the event queue is a position corresponding to the occurrence time of this event;
the to-be-matched event group determination unit is specifically configured for:
   determining the to-be-matched event group(s) including the current event from the event queue by performing sequential matching in the event queue through a matching window, wherein a length of the matching window is a length corresponding to the synchronization fault tolerance duration in the event queue.

In an embodiment of the present application, the to-be-matched event group determination unit is specifically configured for performing, from a position corresponding to a start time of a first time range as a start position, the sequential matching in a queue area corresponding to the first time range in the event queue by sliding the matching window in a preset sliding step length, and in the matching process, determining, within the queue area, the to-be-matched event group(s) in the matching window including the current event until the matching ends, wherein the first time range is a range with the occurrence time of the current event as a center and the synchronization fault tolerance duration as an extension duration.

In an embodiment of the present application, the apparatus further includes a time difference value determination module, configured for determining, after obtaining the current event detected by the event detection device, a difference value between occurrence time and acquisition time of the current event;
the action determination module is configured for determining, when the difference value meets a preset delay allowance condition, and there is the target event group that matches the event group in the linkage rule and includes the current event in the obtained events, the target response action corresponding to the target event group from the linkage rule.

In an embodiment of the present application, the linkage rule specifically includes a preset correspondence among an event group, a response action, and a triggering time range;
the action determination module is specifically configured for determining, when there is a target event group that matches an event group in a linkage rule and includes the current event in the obtained events, a target triggering time range corresponding to the target event group from the linkage rule; in case that there is an intersection between a third time range and the target triggering time range, determining a response action corresponding to the target event group as the target response action, wherein the third time range is a range between an earliest occurrence time and a latest occurrence time among occurrence time of events included in the target event group.

In an embodiment of the present application, the apparatus further includes an action triggering module, configured for triggering, after determining the target response action corresponding to the target event group from the linkage rule, a response device to execute the determined target response action based on the target response action.

In an embodiment of the present application, the event group matching an event group in the linkage rule includes an event group containing the same number of events and the same event content as the event group in the linkage rule, wherein the event content is described based on an event type and a resource number of a corresponding event detection device.

In an embodiment of the present application, the apparatus further includes an occurrence time determination module, which is configured for:
after obtaining the current event detected by the event detection device, determining acquisition time of the current event as occurrence time of the current event; or
after obtaining the current event detected by the event detection device, determining time carried in event content of the current event as the occurrence time of the current event, and the time carried in the event content of the current event is time when the event detection device determines an occurrence of the current event.

In an embodiment of the present application, the obtained events are events whose difference values between occurrence time and acquisition time meet a preset delay allowance condition from cached events detected by the event detection device; and/or
the obtained events are events whose occurrence time is within a second time range from the cached events detected by the event detection device, and the second time range is a time range determined with a current time as a benchmark and a preset delay allowance duration as an extension duration.

In an embodiment of the present application, the apparatus further includes an event removing module, which is configured for: detecting continuously, from the cached events, an event whose difference value between the occurrence time and the current time is greater than the preset delay allowance duration; removing the detected event from the cached events.

The action determination when applying the solutions provided by the aforementioned embodiments includes: obtaining a current event detected by an event detection device; when there is a target event group that matches an event group in a linkage rule and includes the current event in the obtained events, determining a target response action corresponding to the target event group from the linkage rule. Since the interval between the occurrence time of any two events in the target event group does not exceed a preset synchronization fault tolerance duration, it can be considered that all events in the target event group occur at the same time, and further, an action corresponding to the target event group can be determined in the linkage rule. It can be seen that the corresponding action can be determined jointly through multiple events by applying the action determination solution provided by the aforementioned embodiments.

The embodiment of the present application also provides an electronic device. In one case, as shown in FIG. 11a, the electronic device includes a processor 1101 and a memory 1103.

The memory 1103 is configured for storing computer programs; the processor 1101 is configured for implementing the above-mentioned action determination method when executing the programs stored on the memory 1103.

In another case, as shown in FIG. 11b, the electronic device further includes a communication interface 1002 and a communication bus 1104, wherein the processor 1101, the communication interface 1102 and the memory 1103 communicate with each other via the communication bus 1104.

The communication bus aforementioned in the electronic device may be a peripheral component interconnect (PCI) bus or an extended industry standard architecture (EISA) bus and the like. The communication bus can include an address bus, a data bus, a control bus, or the like. For representation, only one thick line is shown in the figure, which does not mean there is only one communication bus or one type of communication bus.

The communications interface is configured for communications between the aforementioned electronic device and other devices.

The memory can include a random access memory (RAM), or can include a non-volatile memory (NVM), for example at least one disk memory. Optionally, the memory can also be at least one storage device located away from the processor described above.

The aforementioned processor can be a general-purpose processor, such as a central processing unit (CPU), a network processor (NP), or the like. It can also be a digital signal processor (DSP), an application specific integrated circuit (ASIC), a field-programmable gate array (FPGA) or other programmable logic device, a discrete gate or transistor logic device, a discrete hardware component.

The embodiment of the present application provides a computer readable storage medium storing computer programs which, when executed by a processor, cause the processor to implement steps of any of the action determination method.

The embodiment of the present application provides a non-transitory storage medium storing computer programs, which when executed by the processor, cause the processor to implement steps of any of the action determination method. The non-transitory storage media may be a read-only memory, a random access memory, a read-only optical disk, a magnetic tape, a floppy disk, an optical data storage device, and the like.

The embodiment of the present application further provides a computer program product including instructions that, when running on a computer, cause the computer to implement any of the action determination method in the above-mentioned embodiments.

The action determination when applying the solutions provided by the aforementioned embodiments includes: obtaining a current event detected by an event detection device; when there is a target event group that matches an event group in a linkage rule and includes the current event in the obtained events, determining a target response action corresponding to the target event group from the linkage rule. Since the interval between the occurrence time of any two events in the target event group does not exceed a preset synchronization fault tolerance duration, it can be considered that all events in the target event group occur at the same time, and further an action corresponding to the target event group can be determined in the linkage rule. It can be seen that the corresponding action can be determined jointly through multiple events by applying the action determination solution provided by the aforementioned embodiments.

In the aforementioned embodiments, it may be implemented in whole or in part by software, hardware, firmware, or any combination thereof. When implemented by software, it may be implemented in whole or in part in the form of a computer program product. The computer program product includes one or more computer instructions. The processes or functions described in accordance with the embodiments of the present invention is produced in whole or in part, when the computer program instructions are loaded and executed on a computer. The computer may be a general-purpose computer, a dedicated computer, a computer network, or other programmable device. The computer instructions may be stored in a computer-readable storage medium or may be transmitted from one computer-readable storage medium to another computer-readable storage medium, for example, the computer instructions may be transmitted from a web site, a computer, a server, or a data center to another web site, another computer, another server, or another data center via a wired (such as a coaxial cable, an optical fiber, a digital subscriber line (DSL)) or wireless (such as infrared, wireless, microwave, etc.) connection. The computer-readable storage medium may be any available medium that may be accessed by a computer or a data storage device such as a server or a data center containing one or more available medium integrations. The available media may be magnetic media (such as floppy disks, hard disks, magnetic tapes), optical media (such as DVDs), or semiconductor media (such as solid state disk (SSD)), etc.

It should be noted that, the relationship terms herein such as "first", "second" and the like are only used to distinguish one entity or operation from another entity or operation, but do not necessarily require or imply that there is actual relationship or order between these entities or operations. Moreover, the terms "include", "comprise" or any other variants thereof are intended to cover a non-exclusive inclusion, so that processes, methods, articles, or devices including a series of elements include not only those elements listed but also those not specifically listed or elements intrinsic to these processes, methods, articles, or equipment. Without further limitations, elements defined by the sentences "comprise(s) a..." or "include(s) a..." do not exclude that there are other identical elements in the processes, methods, articles, or devices which include these elements.

All the embodiments are described in corresponding ways, same or similar parts in each of the embodiments can be referred to one another, and the parts emphasized are differences to other embodiments. In particular, for embodiments of system, apparatus, electronic device, computer readable storage medium, non-transitory storage medium and computer program product, since they are substantially similar to the embodiments of the method, their description is relatively simple, and for the related aspects, one only needs to refer to portions of the description of the embodiments of the method.

The description is only for preferred embodiments of the present application, and embodiments are not so limited. Any modifications, substitutions, improvements or the like made within the spirit and principles of the present application fall into the protection scope of the present application.

## Claims

1. An action determination method, comprising:
obtaining a current event detected by an event detection device;
when there is a target event group that matches an event group in a linkage rule and comprises the current event, in obtained events, determining a target response action corresponding to the target event group from the linkage rule, wherein, an interval between occurrence time of any two events in the target event group does not exceed a preset synchronization fault tolerance duration, and the linkage rule comprises a preset correspondence between an event group and a response action.

2. The method of claim 1, wherein after obtaining the current event detected by the event detection device, the method further comprises:
determining a to-be-matched event group(s) comprising the current event from the obtained events, wherein, the interval between the occurrence time of any two events in each of the determined to-be-matched event group(s) does not exceed the synchronization fault tolerance duration;
determining, from the determined to-be-matched event group(s), the target event group that matches the event group in the linkage rule.

3. The method of claim 2, wherein determining a to-be-matched event group(s) comprising the current event from the obtained events, comprises:
adding the current event to an event queue based on occurrence time of the current event, wherein the event queue is a queue in which the obtained events are arranged in an order of the occurrence time;
determining the to-be-matched event group(s) comprising the current event from the event queue by using the synchronization fault tolerance duration.

4. The method of claim 3, wherein
each position in the event queue correspond to one time point, and time points respectively corresponding to respective positions in the event queue follow a preset variation rule, and a queue position of each event in the event queue is a position corresponding to the occurrence time of this event;
determining the to-be-matched event group(s) comprising the current event from the event queue by using the synchronization fault tolerance duration comprises:
determining the to-be-matched event group(s) comprising the current event from the event queue by performing sequential matching in the event queue through a matching window, wherein a length of the matching window is a length corresponding to the synchronization fault tolerance duration in the event queue.

5. The method of claim 4, wherein determining the to-be-matched event group(s) comprising the current event from the event queue by performing sequential matching in the event queue through a matching window, comprises:
performing, from a position corresponding to a start time of a first time range as a start position, the sequential matching in a queue area corresponding to the first time range in the event queue by sliding the matching window in a preset sliding step length, and in the matching process, determining, within the queue area, the to-be-matched event group(s) in the matching window comprising the current event until the matching ends, wherein the first time range is a range with the occurrence time of the current event as a center and the synchronization fault tolerance duration as an extension duration.

6. The method of claim 1, wherein after obtaining the current event detected by the event detection device, the method further comprises:
determining a difference value between occurrence time and acquisition time of the current event;
when there is a target event group that matches an event group in the linkage rule and comprises the current event in the obtained events, determining a target response action corresponding to the target event group from the linkage rule, comprises:
when the difference value meets a preset delay allowance condition, and there is the target event group that matches the event group in the linkage rule and comprises the current event in the obtained events, determining the target response action corresponding to the target event group from the linkage rule.

7. The method of claim 1, wherein
the obtained events are events whose difference values between occurrence time and acquisition time meet a preset delay allowance condition, from cached events detected by the event detection device; and/or
the obtained events are events whose occurrence time is within a second time range from the cached events detected by the event detection device, and the second time range is a time range determined with a current time as a benchmark and a preset delay allowance duration as an extension duration.

8. The method of claim 7, comprising:
detecting continuously, from the cached events, an event whose difference value between the occurrence time and the current time is greater than the preset delay allowance duration;
removing the detected event from the cached events.

9. The method of claim 1, wherein
the linkage rule specifically comprises a preset correspondence among an event group, a response action, and a triggering time range;
determining a target response action corresponding to the target event group from the linkage rule, comprises:
determining a target triggering time range corresponding to the target event group from the linkage rule;
in case that there is an intersection between a third time range and the target triggering time range, determining a response action corresponding to the target event group as the target response action, wherein the third time range is a range between an earliest occurrence time and a latest occurrence time among occurrence time of events comprised in the target event group.

10. The method of claim 1, wherein the event group matching an event group in the linkage rule comprises an event group containing the same number of events and the same event content as the event group in the linkage rule, wherein the event content is described based on an event type and a resource number of a corresponding event detection device.

11. The method of any one of claims 1 to 10, wherein
after determining the target response action corresponding to the target event group from the linkage rule, the method further comprises:
triggering, based on the determined target response action, a response device to execute the target response action.

12. The method of any one of claims 1 to 10, wherein
after obtaining the current event detected by the event detection device, the method further comprises:
determining acquisition time of the current event as occurrence time of the current event; or
determining time carried in event content of the current event as the occurrence time of the current event, and the time carried in the event content of the current event is time when the event detection device determines an occurrence of the current event.

13. An action determination system, which comprises a server and at least one event detection device, wherein:
the event detection device is configured for detecting a current event that currently occurs, and sending the detected current event to the server;
the server is configured for receiving the current event, and determining, when there is a target event group that matches an event group in a linkage rule and comprises the current event, in obtained events, a target response action corresponding to the target event group from the linkage rule, wherein, an interval between occurrence time of any two events in the target event group does not exceed a preset synchronization fault tolerance duration, and the linkage rule comprises a preset correspondence between an event group and a response action.

14. The system of claim 13, wherein the system further comprises at least one response device, wherein:
the server is further configured for sending a trigger instruction about the target response action to the at least one response device after determining the target response action;
the response device is configured for executing the target response action when receiving the trigger instruction about the target response action.

15. The system of claim 13 or 14, wherein the system further comprises a relay server, wherein:
the event detection device is configured for detecting the current event that currently occurs, and sending the detected current event to the relay server;
the relay server is configured for receiving the current event and sending the current event to the server.

16. An action determination apparatus, comprising:
an event obtaining module, configured for obtaining a current event detected by an event detection device;
an action determining module, configured for determining, when there is a target event group that matches an event group in a linkage rule and comprises the current event, in obtained events, a target response action corresponding to the target event group from the linkage rule, wherein, an interval between occurrence time of any two events in the target event group does not exceed a preset synchronization fault tolerance duration, and the linkage rule comprises a preset correspondence between an event group and a response action.

17. The apparatus of claim 16, comprising:
a to-be-matched event group determination module, configured for determining, after obtaining the current event detected by the event detection device, a to-be-matched event group(s) comprising the current event from the obtained events, wherein, the interval between occurrence time of any two events in each of the determined to-be-matched event group(s) does not exceed the synchronization fault tolerance duration;
a target event group determination module configured for determining, from the determined to-be-matched event group(s), the target event group that matches the event group in the linkage rule.

18. The apparatus of claim 17, wherein the to-be-matched event group determination module comprises:
an event queue adding unit, configured for adding, after obtaining the current event detected by the event detection device, the current event to an event queue based on occurrence time of the current event, wherein the event queue is a queue in which the obtained events are arranged in an order of the occurrence time;
a to-be-matched event group determination unit, configured for determining the to-be-matched event group(s) comprising the current event from the event queue by using the synchronization fault tolerance duration.

19. The apparatus of claim 18, wherein
each position in the event queue correspond to one time point, and time points respectively corresponding to respective positions in the event queue follow a preset variation rule, and a queue position of each event in the event queue is a position corresponding to the occurrence time of this event;
the to-be-matched event group determination unit is specifically configured for:
determining the to-be-matched event group(s) comprising the current event from the event queue by performing sequential matching in the event queue through a matching window, wherein a length of the matching window is a length corresponding to the synchronization fault tolerance duration in the event queue.

20. The apparatus of claim 19, wherein
the to-be-matched event group determination unit is specifically configured for performing, from a position corresponding to a start time of a first time range as a start position, the sequential matching in a queue area corresponding to the first time range in the event queue by sliding the matching window in a preset sliding step length, and in the matching process, determining, within the queue area, the to-be-matched event group(s) in the matching window comprising the current event until the matching ends, wherein the first time range is a range with the occurrence time of the current event as a center and the synchronization fault tolerance duration as an extension duration.

21. The apparatus of claim 16, wherein
the obtained events are events whose difference values between occurrence time and acquisition time meet a preset delay allowance condition, from cached events detected by the event detection device; and/or
the obtained events are events whose occurrence time is within a second time range from the cached events detected by the event detection device, and the second time range is a time range determined with a current time as a benchmark and a preset delay allowance duration as an extension duration.

22. The apparatus of claim 21, wherein the apparatus further comprises an event removing module, which is configured for:
detecting continuously, from the cached events, an event whose difference value between the occurrence time and the current time is greater than the preset delay allowance duration;
removing the detected event from the cached events.

23. The apparatus of claim 16, wherein the linkage rule specifically comprises a preset correspondence among an event group, a response action, and a triggering time range;
the action determination module is specifically configured for determining, when there is a target event group that matches an event group in a linkage rule and comprises the current event in the obtained events, a target triggering time range corresponding to the target event group from the linkage rule; in case that there is an intersection between a third time range and the target triggering time range, determining a response action corresponding to the target event group as the target response action, wherein the third time range is a range between an earliest occurrence time and a latest occurrence time among occurrence time of events comprised in the target event group.

24. The apparatus of claim 16, wherein
the apparatus further comprises a time difference value determination module, configured for determining, after obtaining the current event detected by the event detection device, a difference value between occurrence time and acquisition time of the current event;
the action determination module is configured for determining, when the difference value meets a preset delay allowance condition, and there is the target event group that matches the event group in the linkage rule and comprises the current event in the obtained events, the target response action corresponding to the target event group from the linkage rule.

25. The apparatus of claim 16, wherein the event group matching an event group in the linkage rule comprises an event group containing the same number of events and the same event content as the event group in the linkage rule, wherein the event content is described based on an event type and a resource number of a corresponding event detection device.

26. The apparatus of any one of claims 16 to 25, wherein
the apparatus further comprises an action triggering module, configured for triggering, after determining the target response action corresponding to the target event group from the linkage rule, a response device to execute the determined target response action based on the target response action.

27. The apparatus of any one of claims 16 to 25, wherein
the apparatus further comprises an occurrence time determination module, which is configured for:
after obtaining the current event detected by the event detection device, determining acquisition time of the current event as occurrence time of the current event; or
after obtaining the current event detected by the event detection device, determining time carried in event content of the current event as the occurrence time of the current event, and the time carried in the event content of the current event is time when the event detection device determines an occurrence of the current event.

28. An electronic device, comprising a processor and a memory, wherein
the memory is configured for storing computer programs;
the processor is configured for implementing the method of any one of claims 1-12 when executing the computer programs stored on the memory.

29. A non-transitory storage medium storing computer programs thereon which, when executed by a processor, cause the processor to implement the method of any one of claims 1-12.

30. A computer program product containing instructions which, when executed on a computer, cause the computer to implement the method of any one of claims 1-12.
